Europäisches Patentamt

European Patent Office

Office européen des brevets

(19)

(11) Veröffentlichungsnummer: **0 025 999**
**A2**

(12) ## EUROPÄISCHE PATENTANMELDUNG

(21) Anmeldenummer: **80105692.0**

(22) Anmeldetag: **22.09.80**

(51) Int. Cl.³: **H 04 N 3/12**

(30) Priorität: **25.09.79 DE 2938759**

(43) Veröffentlichungstag der Anmeldung:
**01.04.81 Patentblatt 81/13**

(84) Benannte Vertragsstaaten:
**AT CH FR GB IT LI NL SE**

(71) Anmelder: **SIEMENS AKTIENGESELLSCHAFT Berlin und München**
**Postfach 22 02 61**
**D-8000 München 22(DE)**

(72) Erfinder: **Geffcken, Walter, Dipl.-Ing.**
**Hogenbergplatz 3**
**D-8000 München 21(DE)**

(54) **Verfahren und Schaltungsanordnung zum Ansteuern einer Gasentladungsanzeigevorrichtung.**

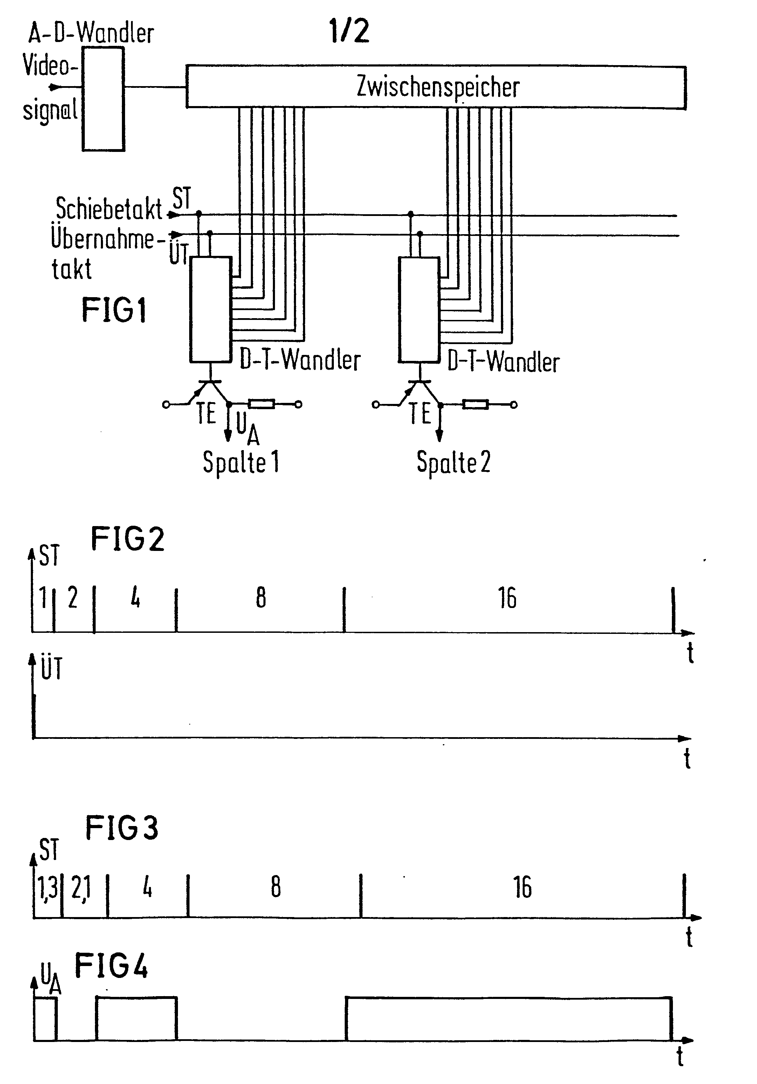

(57) Bei einem Verfahren zum Ansteuern der Spaltenleitungen einer Gasentladungsanzeigevorrichtung mittels modulierten Spannungssignalen wird vorgeschlagen, daß die Spannungssignale pulsdauermoduliert werden (Fig. 1).

FIG 1

EP 0 025 999 A2

BEZEICHNUNG GEÄNDERT
siehe Titelseite

SIEMENS AKTIENGESELLSCHAFT          Unser Zeichen
Berlin und München                  VPA 79 P 1 1 5 7 EUR

Verfahren zum Ansteuern einer Gasentladungsanzeigevorrichtung

Die Erfindung betrifft ein Verfahren zum Ansteuern der Spaltenleitungen einer Gasentladungsanzeigevorrichtung mittels modulierten Spannungssignalen.

Eine Gasentladungsanzeigevorrichtung mit einem Gasentladungs- und einem Nachbeschleunigungsraum, die durch eine gelochte, mit Zeilen- und Spaltenleitungen versehene Steuerscheibe voneinander getrennt sind, ist beispielsweise aus der DE-OS 24 12 869 bekannt. Bei diesem flachen Plasmabildschirm wird die Helligkeit der Phosphorbildpunkte von den Spannungen an den Spaltenleitungen (Steuerleitungen) bestimmt. Bisher wurde bei einem flachen Plasmabildschirm eine Amplitudenmodulation der Ansteuersignale verwendet. Eine Amplitudenmodulation der Steuerleitungsspannungen bringt

Rb 1 Pj
21.09.1979

jedoch große Nachteile mit sich. Diese liegen hauptsächlich darin, daß es schwer realisierbar ist, die für jede Spaltenleitung notwendigen Ansteuerschaltungen untereinander so gleich zu machen, daß über den gesamten Dynamikbereich keine größeren Abweichungen der Ansteuerspannungen untereinander als maximal 1 % auftreten. Außerdem bringt eine Variation der Helligkeit über die Strahlstromstärke bei den in Frage kommenden Beschleunigungsspannungen von Maximal 5 kV Schwierigkeiten hinsichtlich der Linearität, da man, um die erforderliche Helligkeit zu erreichen, in den Bereich beginnender Sättigung des Phosphors gelangt.

Der vorliegenden Erfindung liegt die Aufgabe zugrunde, für die Variation der Helligkeit ein besseres Ansteuerverfahren zu schaffen. Zur Lösung dieser Aufgabe ist bei einem Verfahren der eingangs genannten Art erfindungsgemäß vorgesehen, daß die Spannungssignale pulsdauermoduliert werden.

Dabei werden die Videoeingangssignale in einem Analog-Digital-Wandler digitalisiert und als Informationen in einen Zwischenspeicher eingespeist, ein digitales Schieberegister oder ein Zähler als Pulsdauermodulator werden parallel mit diesen Informationen geladen. Dieses Informationsmuster wird im Fall eines Schieberegisters seriell aus diesem herausgeschoben.

Bevorzugte Schaltungsanordnungen zum Durchführen des erfindungsgemäßen Verfahrens sind in den Ansprüchen 2 und 3 charakterisiert.

Die erfindungsgemäße Pulsdauermodulation (PDM) bringt generell den Vorteil, daß nach der Digitalisierung des Videosignals nur noch eine digitale Signalverarbeitung notwendig ist, so daß die Toleranzen der Bauelemente eliminiert sind. Der Phosphor wird bei PDM-Ansteuerung mit einem konstanten Strahlstromwert belastet; Unlinearitäten des Phosphors spielen daher keine Rolle.

Die Helligkeitsvariation erfolgt über die Zeitdauer des Helltastens, wobei die Steuerleitungen (Spalten) zwischen den beiden Spannungspegeln $U_{St}$ (völliges Sperren der Elektronen) und $U_d$ (völliger Durchlaß der Elektronen durch die Steuerlöcher) geschaltet werden. Maximale Helligkeit wird erreicht, wenn die betreffende Steuerleitung während einer gesamten Zeilenauswahlzeit $T_Z$ (z.B. 64 $\mu$s) auf $U_d$ liegt. Jeder beliebige geringere Helligkeitswert kann durch Reduzieren der Helltastzeit erreicht werden.

Bei einer Steuerscheibe treten durch den Glasätzprozeß Ungleichmäßigkeiten der Steuerlochöffnungen auf. Bei analoger Steuerleitungsansteuerung bewirken diese Ungleichmäßigkeiten eine inhomogene Helligkeitsverteilung auf dem Bildschirm. Das erfindungsgemäße Verfahren hat demgegenüber den weiteren Vorteil, daß durch geeignete Wahl der Spannungspegel $U_{St}$ und $U_d$ diese Inhomogenitäten reduziert werden, da nur zwischen Sperr- und Durchlaßzustand geschaltet wird und unterschiedliche Kennlinienteilheiten eine geringere Rolle spielen.

Das Problem bei der Pulsdauermodulation der Steuerleitungsspannung liegt in der Wandlung der digitalen Information in eine proportionale Impulslänge (Pulsdauermodulator). Die minimale Impulslänge ergibt sich bei zeilenweiser Adressierung zu $T_Z/2^m$, wobei $T_Z$ die Zeilenauswahlzeit und m die Anzahl der binären Bits bedeuten. Je größer m, also die Anzahl der wiederzugebenden
Graustufen, umso kürzer müssen auch die Impulsanstiegszeiten sein, um keine Verzerrung des Graukeils im Bereich geringer Helligkeiten zu erhalten.

Der Pulsdauermodulator kann durch einen voreinstellbaren Rückwärtszähler mit nachgeschaltetem Flip-Flop oder
ein Schieberegister realisiert werden. Bei der Schaltung
mit einem digitalen Schieberegister wird dieses parallel mit der Information geladen. Ein Takt schiebt das
Informationsmuster seriell heraus. Der Taktgenerator
ist zweckmäßig so gestaltet, daß sich die Impulsabstände
wie 1 : 2 : 4 ..... : $T_Z/2$ verhalten. Das Verhältnis
kann aber den Erfordernissen entsprechend leicht verändert werden. So können im Bereich kurzer Impulslängen
zu lange Anstiegszeiten korrigiert werden, um trotzdem
eine lineare Grauskala zu erhalten. Am Ausgang des
Schieberegisters erscheint nun eine informationsabhängige Anzahl von Impulsen verschiedener Dauer, wobei die
Summe der Impulslängen proportional der ursprünglichen
analogen Videosignalamplitude ist. Bei Verwendung eines
Zählers wird dieser zu Beginn einer Zeilenauswahlzeit
mit der Information voreingestellt und ein Flip-Flop
zurückgesetzt. Der Zähler zählt nun rückwärts und gibt
bei Erreichen des Zustandes "Null" einen Übertragungsimpuls ab, der das Flip-Flop triggert. Die Zeitdauer
während der das Flip-Flop den logischen Zustand "L"
innehat, ist proportional zu dem Wert der Information,
da die Frequenz des Zähltaktes konstant ist ($f = 2^m/T_Z$).

Weitere Einzelheiten der Erfindung sollen an Hand von
in den Figuren der Zeichnung rein schematisch dargestellten Ausführungsbeispielen näher erläutert werden. Teile, die nicht unbedingt zum Verständnis der Erfindung beitragen, sind in den Figuren unbezeichnet oder weggelassen. Dabei zeigen:

Fig. 1 schematisch eine Schaltungsanordnung mit einem Schieberegister als Pulsdauermodulator,

Fig. 2 den zeitlichen Verlauf der Schiebetaktimpulse und der Übernahmeimpulse bei binärer Bewertung,

Fig. 3 den zeitlichen Verlauf der Schiebetaktimpulse, wenn eine Impulslängenkorrektur erforderlich ist,

Fig. 4 ein Beispiel einer möglichen Impulsfolge am Ausgang des Pulsdauermodulators,

Fig. 5 schematisch eine Schaltungsanordnung mit einem Zähler als Pulsdauermodulator und die

Fig. 6 den zeitlichen Verlauf des Übernahme- und Zähltaktes sowie die Ausgangsspannung $U_A$ nach der Verstärkerstufe.

Die in Fig. 1 dargestellte Schaltungsanordnung besteht im wesentlichen aus einem Analog-Digital-Wandler (A-D-Wandler), in dem das ankommende Videosignal digitalisiert wird. Das digitalisierte Videosignal wird vom Zwischenspeicher parallel in das als Pulsdauermodulator dienende Schieberegister übernommen. Als D-T-Wandler wird in diesem Ausführungsbeispiel ein digitales Schieberegister verwendet. Die parallele Übernahme vom Zwischenspeicher in den Pulsdauermodulator wird durch Übernahmetakte ÜT gesteuert, die in einem nicht dargestellten Taktgenerator erzeugt werden. Das serielle Herausschieben der Informationsmuster aus dem Pulsdauermodulator erfolgt mittels Schiebetakten ST, die wie-

derum in einem nicht dargestellten Taktgenerator erzeugt werden. Die Abstände der Schiebetaktimpulse sind dabei binär abgestuft. Die Ausgangssignale $U_A$ werden jeweils über Transistorendverstärkerstufen TE verstärkt und den Spaltenleitungen zugeführt. Die Spaltenleitungen sind in Fig. 1 mit Spalte 1 und Spalte 2 angedeutet.

Fig. 2 zeigt den zeitlichen Verlauf der Schiebetaktimpulse ST und der Übernahmeimpulse ÜT bei binärer Bewertung.

Fig. 3 stellt den zeitlichen Verlauf der Schiebetaktimpulse ST dar, wenn eine Korrektur der Impulslängen erforderlich ist.

Fig. 4 zeigt eine mögliche Impulsfolge des Ausgangssignals $U_A$ am Ausgang des in diesem Ausführungsbeispiel als Pulsdauermodulator verwendeten D-T-Wandlers.

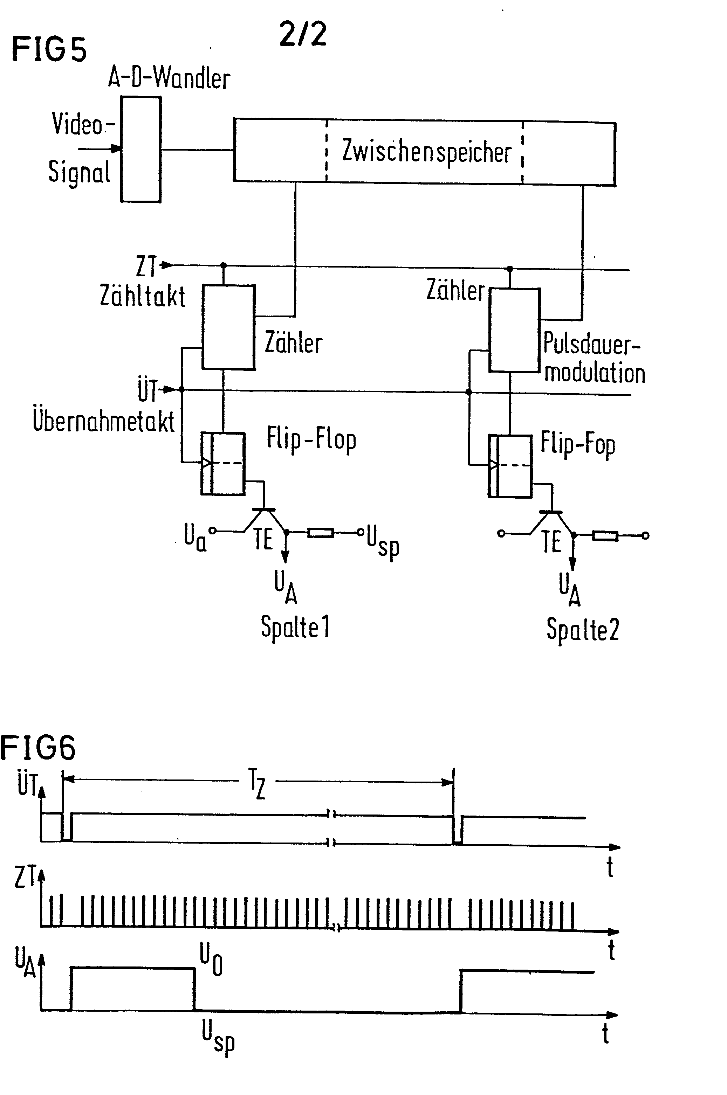

Die in Fig. 5 dargestellte Schaltungsanordnung besteht wiederum im wesentlichen aus einem Analog-Digital-Wandler (A-D-Wandler) in dem das ankommende Videosignal digitalisiert wird. Das digitalisierte Videosignal wird vom Zwischenspeicher parallel in den Pulsdauermodulator übernommen. Der Pulsdauermodulator besteht in diesem Ausführungsbeispiel aus einem voreinstellbaren Rückwärtszähler mit nachgeschaltetem Flip-Flop. Zähltakte ZT und Übernahmetakte ÜT werden in nicht dargestellten Taktgeneratoren erzeugt und dienen zum Steuern der parallelen Übernahme der Informationen vom Zwischenspeicher und zum seriellen Herausschieben der Informationsmuster aus dem Pulsdauermodulator. Die Ausgangssignale $U_A$ werden jeweils über Transistorendstufen TE verstärkt und den Spaltenleitungen zugeführt. Als Spaltenleitungen sind in Fig. 5 die Spalte 1 und Spalte 2 angedeutet.

Fig. 6 zeigt den zeitlichen Verlauf des Übernahmetaktes
ÜT und des Zähltaktes ZT sowie die Ausgangsspannung $U_A$
nach der Transistorverstärkerstufe TE.


4 Patentansprüche,
6 Figuren.

Patentansprüche

1. Verfahren zum Ansteuern der Spaltenleitungen einer Gasentladungsanzeigevorrichtung mittels modulierten Spannungssignalen, d a d u r c h g e k e n n - z e i c h n e t , daß die Spannungssignale pulsdauermoduliert werden.

2. Verfahren nach Anspruch 1, d a d u r c h g e k e n n z e i c h n e t , daß die Videoeingangssignale in einem Analog-Digital-Wandler digitalisiert und als Informationen in einen Zwischenspeicher eingespeist werden, daß ein digitales Schieberegister oder ein Zähler als Pulsdauermodulator parallel mit diesen Informationen geladen werden und daß diese Informationsmuster bei der Verwendung eines Schieberegisters seriell aus dem Pulsdauermodulator herausgeschoben wird.

3. Schaltungsanordnung zum Durchführen des Verfahrens nach Anspruch 1 oder 2, g e k e n n z e i c h n e t durch einen Analog-Digital-Wandler zum Digitalisieren der Videoeingangssignale, durch einen Zwischenspeicher zum Einspeichern der digitalisierten Informationen und durch einen Zähler oder ein digitales Schieberegister als Pulsdauermodulator, der parallel mit einer Information geladen wird und bei Verwendung eines Schieberegisters jeweils Takte aus einem Taktgeber das Informationsmuster seriell herausschieben, das zum Ansteuern der Spaltenleiter dient.

4. Schaltungsanordnung nach Anspruch 3, d a d u r c h g e k e n n z e i c h n e t , daß der Taktgenerator so gestaltet ist, daß sich die Impulsabstände wie $1 : 2 : 4 \ldots\ldots : T_z/2$ verhalten.

0025999

FIG1

A-D-Wandler

Video-signal

1/2

Zwischenspeicher

Schiebetakt ST

Übernahme-takt ÜT

D-T-Wandler

D-T-Wandler

TE $U_A$

TE

Spalte 1

Spalte 2

FIG2

ST

1 | 2 | 4 | 8 | 16

t

ÜT

t

FIG3

ST

1,3 | 2,1 | 4 | 8 | 16

t

FIG4

$U_A$

t

0025999

**FIG 5**

A-D-Wandler

Video-Signal

Zwischenspeicher

ZT
Zähltakt

Zähler

Zähler

Pulsdauer-modulation

ÜT
Übernahmetakt

Flip-Flop

Flip-Fop

$U_a$ ○ TE $U_{sp}$

$U_A$

Spalte 1

TE

$U_A$

Spalte 2

**FIG 6**

ÜT

$T_Z$

t

ZT

t

$U_A$

$U_0$

$U_{sp}$

t